# EUROPEAN PATENT SPECIFICATION

(11) **EP 3 798 528 B1**
(45) Date of publication and mention of the grant of the patent: **21.08.2024**
(21) Application number: 19807157.3
(22) Date of filing: 07.02.2019
(51) Int. Cl.: F24F 11/86, F24F 11/74, F25B 1/00, F25B 29/00, F24F 1/0059, F24F 11/77, F24F 11/84, F24F 110/10, F24F 140/50

(54) **AIR CONDITIONER**
KLIMAANLAGE
CLIMATISEUR

(30) Priority: 21.05.2018 JP 2018096704
(43) Date of publication of application: 31.03.2021
(73) Proprietor: Panasonic Intellectual Property Management Co., Ltd., Osaka-shi, Osaka 540-6207 (JP)
(72) Inventor: KOBAYASHI, Hideyuki, Osaka 540-6207 (JP); AONO, Masahiro, Osaka 540-6207 (JP)
(74) Representative: Eisenführ Speiser
(86) International application number: PCT/JP2019/004324
(87) International publication number: WO 2019/225066

(56) References cited:
- WO-A1-2015/166541
- DE-T5- 112015 006 816
- JP-A- 2003 254 583
- JP-A- 2006 162 197
- JP-A- 2006 162 197
- JP-A- 2006 177 599
- JP-A- 2006 177 599
- JP-A- 2006 284 175
- JP-A- H07 218 005
- JP-A- H11 304 285

## Description

### TECHNICAL FIELD

The present invention relates to an air conditioner that controls an operation frequency of a compressor in accordance with an air conditioning load in a room.

### BACKGROUND ART

A general air conditioner configures a refrigeration cycle by sequentially connecting a compressor, a condenser, an expansion valve, and an evaporator in an annular form, and changes an amount of refrigerant circulated in the refrigeration cycle by controlling an operation frequency of the compressor to control an air conditioning capacity.

In the air conditioner configured as described above, a minimum operation frequency is set in the operation frequency of the compressor in order to ensure a smooth rotation of the compressor.

Thus, when the air conditioning capacity at an operation lower than the minimum operation frequency of the compressor is required, the operation of the compressor is turned on and off to perform air conditioning. However, in this case, a temperature of conditioned air after heat exchange fluctuates greatly as the compressor is turned on and off. This reduces comfort. Further, turning on and off the compressor increases power consumption and reduces energy saving.

Thus, there is an attempt to achieve comfortable low capacity air conditioning by, for example, controlling an air blow volume while the compressor is stopped (for example, see PTL 1).

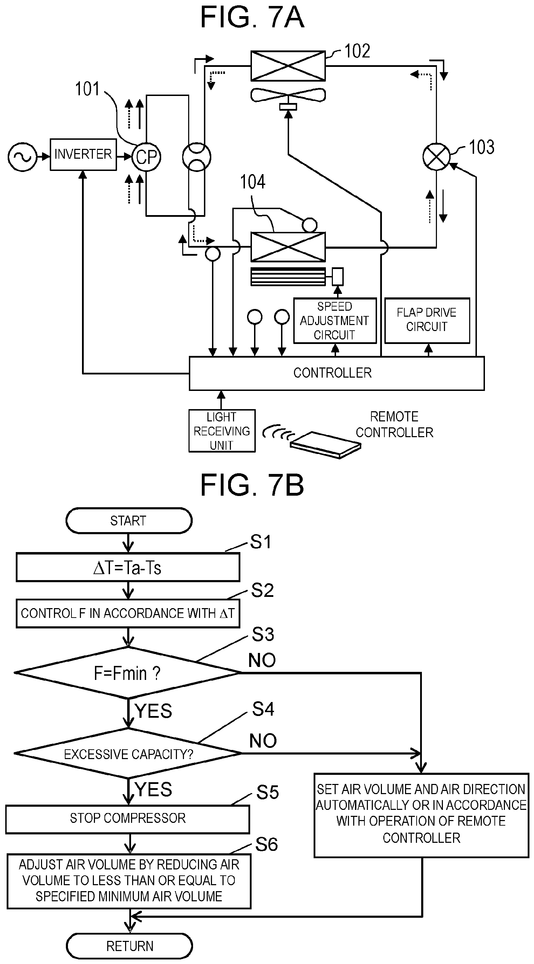

FIGS. 7A and 7B show a schematic configuration diagram and an operation flowchart of an air conditioner disclosed in PTL 1. This air conditioner configures a refrigeration cycle by connecting compressor 101, condenser 102, throttle valve (expansion valve) 103, and evaporator 104, and changes the amount of refrigerant circulated in this refrigeration cycle by controlling the operation frequency of compressor 101 to control the air conditioning capacity. Then, as shown in the operation flowchart of FIG. 7B, the conventional air conditioner first obtains difference ΔT between detected indoor temperature Ta and set indoor temperature Ts (step S1). Next, operation frequency F of compressor 101 is controlled in accordance with difference ΔT (step S2), and it is determined whether an air conditioning load decreases and operation frequency F of compressor 101 is the same as minimum operation frequency Fmin (step S3). Furthermore, when the conventional air conditioner determines in step S3 that operation frequency F of compressor 101 is minimum operation frequency Fmin, the capacity of compressor 101 at that time is excessive for the air conditioning load (step S4). In step S4, when it is determined that the capacity of compressor 101 is excessive for the air conditioning load, compressor 101 is stopped (step S5), and the air blow volume is controlled at less than or equal to a minimum air volume while continuing to blow air into the room (step S6).

PTL 2 describes an air conditioner provided with a variable throttle mechanism provided in the middle of the flow path of an indoor heat exchanger.

### Citation List

### Patent Literature

PTL 1: Unexamined Japanese Patent Publication No. 2003-254585
PTL 2: Unexamined Japanese Patent Publication No. 2006-162197

### SUMMARY OF THE INVENTION

However, in the air conditioner disclosed in PTL 1, the temperature of the conditioned air changes over time because the air is blown while the compressor is stopped. Thus, when the capacity of the compressor is excessive for the air conditioning load, the comfort has not been perfect.

Further, the temperature difference between the conditioned air and the set temperature increases over time, and eventually the compressor is restarted at a predetermined operation frequency. Thus, even if the cycle of turning on and off the compressor can be lengthened, there remains a problem with respect to a reduction in energy saving due to an increase in power consumption by turning on and off the compressor.

The present invention provides an air conditioner that achieves both a low air conditioning capacity itself and improved comfort during low capacity air conditioning.

The present invention provides an air conditioner according to claim 1.

In the air conditioner in the present invention, an indoor heat exchanger that switchably serves as an evaporator or a condenser is divided into a first heat exchange area and a second heat exchange area, the first heat exchange area and the second heat exchange area are connected in series via a second expansion valve, and the first heat exchange area and the second heat exchange area are disposed to overlap each other in an air flow direction. Further, in the air conditioner in the present invention, a controller throttles the second expansion valve when an operation frequency of a compressor is a minimum operation frequency and the air conditioning capacity is excessive for an air conditioning load.

With this configuration, by throttling the second expansion valve, the first heat exchange area and the second heat exchange area of the indoor heat exchanger are divided into a part that functions as a condenser and a part that functions as an evaporator, heat transfer due to a temperature difference occurs between the first heat exchange area and the second heat exchange area, and a heat exchange capacity as the entire heat exchanger can be reduced. That is, the air conditioner of the present invention can continue an air conditioning operation with a capacity lower than the air conditioning capacity when the compressor is operating at the minimum operation frequency, and can greatly improve comfort. Furthermore, the air blown from the air conditioner of the present invention into the room during this low capacity air conditioning does not have a large change in the temperature of the air blown into the room over time, unlike an air conditioner that turns the compressor on and off. Thus, comfortable air conditioning can be provided even if the low capacity air conditioning is continued for a long time. Further, because the air conditioning capacity is reduced, that is, heat transfers between the first heat exchange area and the second heat exchange area in the heat exchanger, an event can be prevented in which the air that has exchanged heat between the first heat exchange area and the second heat exchange area and has a temperature difference is mixed in a fan downstream of the heat exchanger to generate dew condensation water when the capacity is reduced during cooling, and this dew condensation water is blown out together with the conditioned air into the room. Thus, a highly reliable air conditioner can be provided.

With this configuration, the present invention can provide a highly reliable air conditioner that achieves both a low air conditioning capacity and improved comfort during low capacity air conditioning.

### BRIEF DESCRIPTION OF DRAWINGS

FIG. 1 is a schematic configuration diagram of an air conditioner according to a first exemplary embodiment of the present invention.
FIG. 2 is a diagram schematically showing a path configuration of a refrigeration cycle circuit in the air conditioner according to the first exemplary embodiment of the present invention.
FIG. 3 is a schematic configuration diagram showing an indoor unit of the air conditioner according to the first exemplary embodiment of the present invention.
FIG. 4 is a control block diagram of the air conditioner according to the first exemplary embodiment of the present invention.
FIG. 5 is a flowchart showing low capacity control of the air conditioner according to the first exemplary embodiment of the present invention.
FIG. 6 is a flowchart showing low capacity control of an air conditioner according to a second exemplary embodiment of the present invention.
FIG. 7A is a schematic configuration diagram of a conventional air conditioner.
FIG. 7B is a flowchart showing an operation of the conventional air conditioner.

### DESCRIPTION OF EMBODIMENTS

Hereinafter, exemplary embodiments of the present invention will be described with reference to the drawings. Note that the present invention is not limited by the exemplary embodiments and is defined in the claims.

### (First exemplary embodiment)

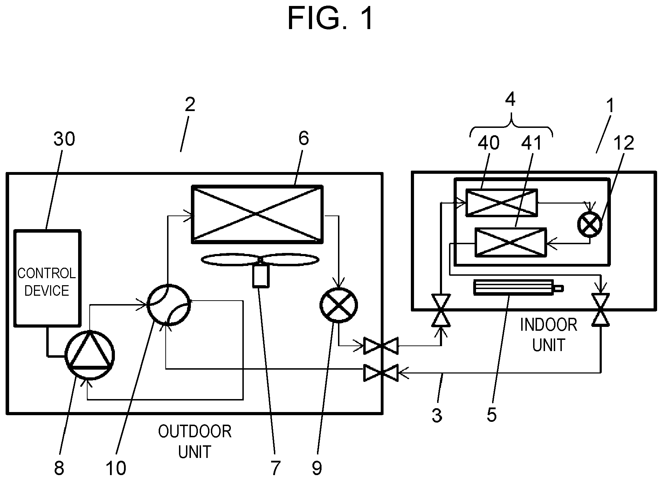

FIG. 1 is a schematic configuration diagram of an air conditioner according to a first exemplary embodiment of the present invention.

As shown in FIG. 1, the air conditioner according to the present exemplary embodiment includes indoor unit 1, outdoor unit 2, and pipe 3 connecting indoor unit 1 and outdoor unit 2. Indoor unit 1 includes indoor heat exchanger 4 used as an evaporator or a condenser and indoor fan 5. Outdoor unit 2 includes outdoor heat exchanger 6 used as a condenser or an evaporator, outdoor fan 7, compressor 8, first expansion valve 9, and four-way valve 10 for switching between heating and cooling.

Indoor heat exchanger 4 of indoor unit 1, and outdoor heat exchanger 6, compressor 8, first expansion valve 9, and four-way valve 10 for switching between cooling and heating of outdoor unit 2 are connected in a loop form by pipe 3. This forms a refrigeration cycle capable of cooling or heating.

Specifically, outdoor heat exchanger 6 is connected to a discharge port of compressor 8 via four-way valve 10 by pipe 3, and indoor heat exchanger 4 is connected to outdoor heat exchanger 6 via first expansion valve 9 by pipe 3. A suction port of compressor 8 is connected to indoor heat exchanger 4 via four-way valve 10 by pipe 3.

Indoor heat exchanger 4 included in indoor unit 1 exchanges heat between indoor air sucked into indoor unit 1 by indoor fan 5 and refrigerant flowing inside indoor heat exchanger 4. Indoor unit 1 blows air cooled by heat exchange into a room during cooling, and blows air warmed by heat exchange into the room during heating.

Outdoor heat exchanger 6 included in outdoor unit 2 exchanges heat between external air sucked into outdoor unit 2 by outdoor fan 7 and the refrigerant flowing inside outdoor heat exchanger 6.

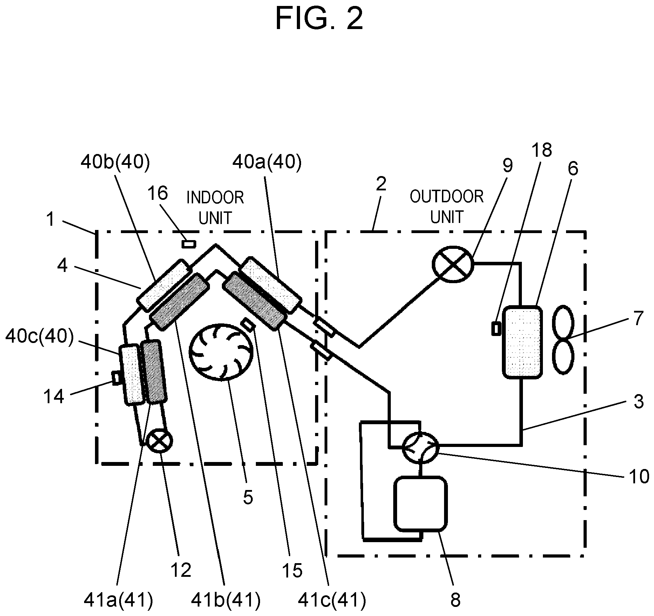

FIG. 2 is a diagram schematically showing a path configuration of a refrigeration cycle circuit in the air conditioner according to the present exemplary embodiment.

As shown in FIG. 2, indoor heat exchanger 4 of indoor unit 1 includes first heat exchange area 40 and second heat exchange area 41. First heat exchange area 40 and second heat exchange area 41 are each divided into a plurality of heat exchange sections. In this example, indoor fan 5 is disposed so as to surround a front side, an upper side, and a rear side of indoor fan 5 in three directions. That is, first heat exchange area 40 is divided into rear side first heat exchange section 40a, upper side second heat exchange section 40b, and front side third heat exchange section 40c. Second heat exchange area 41 is divided into front side first heat exchange section 41a, upper side second heat exchange section 41b, and rear side third heat exchange section 41c.

First heat exchange area 40 and second heat exchange area 41 are connected in series via second expansion valve 12. Furthermore, the heat exchange sections of first heat exchange area 40 and second heat exchange area 41 are disposed to overlap each other in a flow direction of the indoor air passing through the inside of indoor unit 1. That is, first heat exchange section 40a of first heat exchange area 40 and third heat exchange section 41c of second heat exchange area 41, second heat exchange section 40b of first heat exchange area 40 and second heat exchange section 41b of second heat exchange area 41, and third heat exchange section 40c of first heat exchange area 40 and first exchange section 41a of second heat exchange area 41 are disposed to respectively overlap each other in the flow direction of the indoor air passing through the inside of indoor unit 1.

Further, third heat exchange section 40c of first heat exchange area 40 is provided with first temperature detector 14, which detects a temperature of third heat exchanging section 40c. Third heat exchange section 41c of second heat exchange area 41 is provided with second temperature detector 15, which detects a temperature of third heat exchange section 41c.

Further, indoor unit 1 is provided with room temperature detector 16 near an air suction port to detect a room temperature. In the present exemplary embodiment, room temperature detector 16 is provided near an upper surface of indoor unit 1 because air is sucked in from above indoor unit 1. However, a position of room temperature detector 16 is changed depending on a position of the air suction port, and the position of room temperature detector 16 is not limited to near the upper surface of indoor unit 1.

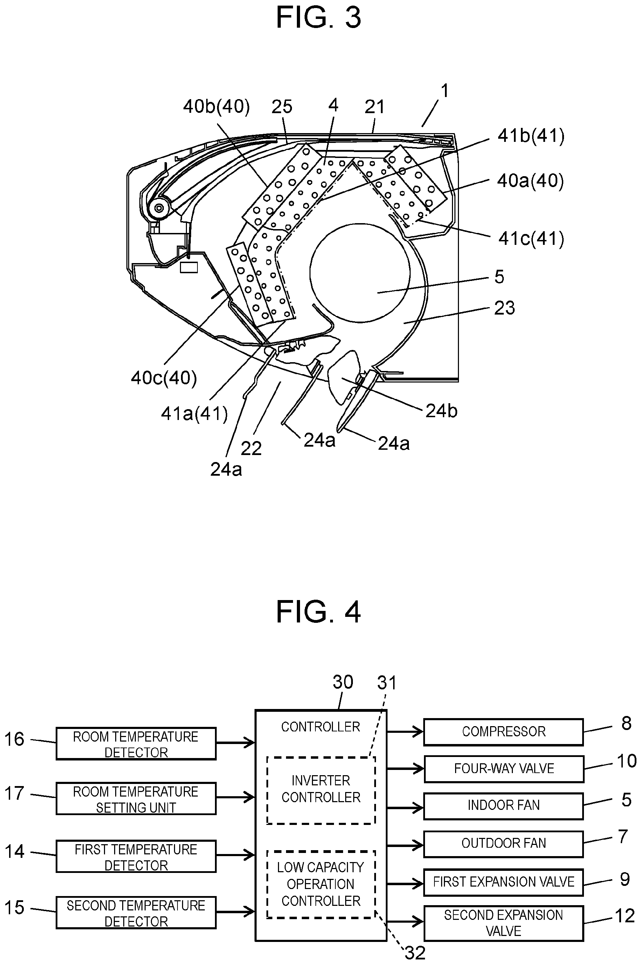

FIG. 3 shows a schematic configuration of indoor unit 1 of the air conditioner according to the present exemplary embodiment. Indoor unit 1 has air suction port 21 and air outlet 22, and air duct 23 connecting air suction port 21 and air outlet 22 is provided with indoor heat exchanger 4 and indoor fan 5. Air suction port 21 is provided with filter 25 that removes dust and the like. When the indoor air is sucked into indoor unit 1 from air suction port 21 by an operation of indoor fan 5, dust and the like included in the sucked indoor air is removed to some extent by filter 25. The air sucked into indoor unit 1 is cooled or warmed by indoor heat exchanger 4, and is blown into the room from air outlet 22 as air for air conditioning. Air outlet 22 is provided with first air direction changing blade 24a that adjusts a direction of blown air to a vertical direction and second air direction changing blade 24b that adjusts the direction of the blown air to a horizontal direction.

FIG. 4 is a control block diagram of the air conditioner according to the present exemplary embodiment. Controller 30 is divided into an indoor controller and an outdoor controller, and controls the entire air conditioner while exchanging signals between the indoor controller and the indoor controller. Controller 30 controls, for example, compressor 8, first expansion valve 9, four-way valve 10, second expansion valve 12, indoor fan 5, outdoor fan 7 on the basis of output from first temperature detector 14, second temperature detector 15, room temperature detector 16, and room temperature setting unit 17.

Controller 30 has inverter controller 31, issues a command to inverter controller 31 on the basis of signals from room temperature detector 16 and room temperature setting unit 17. Inverter controller 31 drives compressor 8 at a frequency in response to the command.

Further, controller 30 adjusts valve opening degrees of first expansion valve 9 and second expansion valve 12 on the basis of signals from room temperature detector 16 and room temperature setting unit 17, and changes a rotation of indoor fan 5 and outdoor fan 7 to control an air conditioning capacity.

Controller 30 also includes low capacity operation controller 32. Low capacity operation controller 32 operates as follows. When controller 30 adjusts the operation frequency of compressor 8 on the basis of signals from room temperature detector 16 and room temperature setting unit 17 to perform air conditioning, the operation frequency of compressor 8 is a minimum operation frequency, and the air conditioning capacity is excessive for the air conditioning load, low capacity operation controller 32 controls first expansion valve 9 and second expansion valve 12 to have valve opening degrees different from opening degrees during a normal operation.

Hereinafter, functions and effects of the air conditioner configured as described above will be described.

First, a flow of the refrigerant during the normal operation will be described. During a cooling operation, the refrigerant compressed by compressor 8 is sent out to outdoor heat exchanger 6 of outdoor unit 2 via four-way valve 10, exchanges heat with the external air, and is condensed and liquified to be liquid refrigerant. The liquid refrigerant is decompressed by first expansion valve 9 set to a predetermined valve opening degree, and sent out to indoor heat exchanger 4 of indoor unit 1. In indoor heat exchanger 4, the liquid refrigerant evaporates into a gas refrigerant by exchanging heat with the indoor air. At this time, second expansion valve 12 of indoor heat exchanger 4 is fully open. This state is substantially equivalent to a state without second expansion valve 12, and first heat exchange area 40 and second heat exchange area 41 of indoor heat exchanger 4 both function as an evaporator. The liquid refrigerant evaporates in indoor heat exchanger 4, the indoor air sucked by indoor fan 5 is converted into cool air, and the liquid refrigerant becomes gas refrigerant. This gas refrigerant returns to compressor 8 of outdoor unit 2 via four-way valve 10. Compressor 8 compresses and discharges the gas refrigerant again, and sends the gas refrigerant to outdoor heat exchanger 6 via four-way valve 10.

In a heating operation, the refrigerant compressed by compressor 8 is sent to indoor heat exchanger 4 of indoor unit 1 via four-way valve 10. In indoor heat exchanger 4, the gas refrigerant is condensed and liquefied by heat exchange with the indoor air to become liquid refrigerant. At this time, second expansion valve 12 of indoor heat exchanger 4 is fully open. This state is equivalent to a state without second expansion valve 12, and first heat exchange area 40 and second heat exchange area 41 of indoor heat exchanger 4 both function as a condenser. The gas refrigerant is condensed in indoor heat exchanger 4, the indoor air sucked by indoor fan 5 is converted into warm air, and the gas refrigerant becomes liquid refrigerant. This liquid refrigerant is decompressed by first expansion valve 9 to become gas-liquid two-phase refrigerant, and sent to outdoor heat exchanger 6 of outdoor unit 2. Outdoor heat exchanger 6 exchanges heat between the external air and the gas-liquid two-phase refrigerant, and thus the gas-liquid two-phase refrigerant evaporates to become gas refrigerant and returns to compressor 8. Compressor 8 compresses and discharges the gas refrigerant, and sends the gas refrigerant to indoor heat exchanger 4 of indoor unit 1 via four-way valve 10.

In the cooling operation or the heating operation, the air conditioning load is obtained by temperature difference ΔT between a set temperature set by the room temperature setting unit 17 and a suction temperature of the indoor air detected by room temperature detector 16, and the operation frequency of compressor 8 changes in accordance with the air conditioning load. For example, when temperature difference ΔT between the set temperature and the suction temperature is large and the air conditioning load is large, for example, at a start of operation, the operation frequency is set higher. When temperature difference ΔT between the set temperature and the suction temperature decreases as the operation progresses and the air conditioning load decreases, the operation frequency is reduced and an air conditioning operation is performed.

When the suction temperature detected by room temperature detector 16 reaches the set temperature set by room temperature setting unit 17, the operation frequency of compressor 8 is set to the minimum operation frequency and the air conditioning operation is continued.

At this time, when the air conditioning capacity is excessive for the air conditioning load even if compressor 8 is operating at the minimum operation frequency, the suction temperature will decrease below the set temperature during cooling, and the suction temperature will increase above the set temperature during heating. However, low capacity operation controller 32 is activated, and this air conditioner can perform the air conditioning operation with a lower capacity than during an operation at the minimum operation frequency.

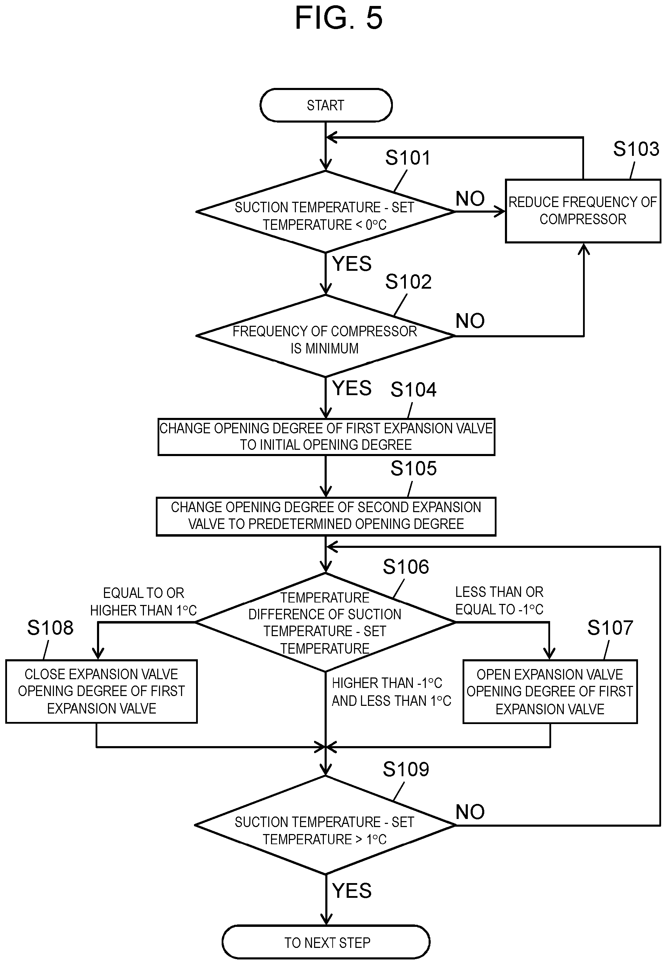

The operation in a low capacity operation will be described below with reference to a flowchart shown in FIG. 5, taking the cooling operation as an example.

Upon start of the air conditioning operation, first, the suction temperature is compared with the set temperature (step S101). When the suction temperature is lower than the set temperature, and in this example, a value of the suction temperature - the set temperature is less than 0°C (YES in step S101), it is determined whether the operation frequency of compressor 8 is the minimum, that is, the minimum operation frequency (step S102). Until it is determined that the operation frequency of compressor 8 has become the minimum, that is, the minimum operation frequency (NO in step S102), a normal air conditioning operation is continued while the operation frequency of compressor 8 is lowered (step S103).

Then, the normal air conditioning operation is continued, the suction temperature is lowered to less than or equal to the set temperature (YES in step S101), and when the operation frequency of compressor 8 is the minimum, that is, the minimum operation frequency (YES in step S102), low capacity operation controller 32 of controller 30 is activated.

Low capacity operation controller 32 first returns the valve opening degree of first expansion valve 9 from a predetermined opening degree to an initial opening degree, in this example, to a full open state (step S104), and changes the valve opening degree of second expansion valve 12 from a full open state during the normal air conditioning operation to a throttled state by a predetermined opening degree, that is, to a predetermined opening degree (step S105).

This state is substantially equivalent to a state without first expansion valve 9, and second expansion valve 12 plays a role of first expansion valve 9 during the normal air conditioning operation. That is, the refrigerant is condensed in first heat exchange area 40 of indoor heat exchanger 4, decompressed by second expansion valve 12 that is throttled to the predetermined opening degree, and sent out to second heat exchange area 41. Then, the refrigerant evaporates in second heat exchange area 41, second heat exchange area 41 functions as an evaporator, and thus the cooling operation is continued.

At this time, a temperature of first heat exchange area 40 is high because first heat exchange area 40 functions as a condenser. Furthermore, a cooling capacity by evaporation of second heat exchange area 41 is reduced by a condensation heat amount due to the condensation of first heat exchange area 40 because first heat exchange area 40 and second heat exchange area 41 overlap each other in the air flow direction. That is, heat transfers between the air with which first heat exchange area 40 exchanges heat and the air with which second heat exchange area 41 exchanges heat. The cooling capacity by evaporation of second heat exchange area 41 is offset by the condensation heat amount of first heat exchange area 40 and reduced.

Thus, during the cooling operation in which the valve opening degree of first expansion valve 9 is in the full open state and the valve opening degree of second expansion valve 12 is set to a predetermined opening degree, the cooling operation can be performed with a lower capacity than in the operation at the minimum operation frequency of compressor 8.

In this way, cooling is performed with low capacity, and temperature difference ΔT between the suction temperature and the set temperature is confirmed (step S106). When temperature difference ΔT is less than or equal to a predetermined temperature, that is, when the air conditioning capacity is excessive for the air conditioning load and the temperature is lowered (less than or equal to -1°C in step S 106) even if the cooling is performed with compressor 8 operated with a capacity of the minimum operation frequency or less, the air conditioning load is determined to be small, and the valve opening degree of first expansion valve 9 is further opened by a predetermined amount from the predetermined opening degree (step S107).

This operation increases the condensation heat amount in first heat exchange area 40, decreases an evaporation heat amount in second heat exchange area 41, further reduces the air conditioning capacity, and allows the cooling operation to be continued with a further lower capacity.

Further, when temperature difference ΔT is equal to or higher than the predetermined temperature, that is, when compressor 8 is cooling at a low capacity that is less than or equal to the minimum operation frequency, the air conditioning load is excessively large, the suction temperature starts to rise, and thus the cooling operation may not be able to be performed in which the suction temperature is lowered to the set temperature. In this example, the suction temperature is higher than the set temperature by 1°C or more (equal to or higher than 1°C in step S106). In this case, the valve opening degree of first expansion valve 9 is throttled by a predetermined amount from the predetermined opening degree (step S108).

This operation decreases the condensation heat amount in first heat exchange area 40, increases the evaporation heat amount in second heat exchange area 41, brings the capacity back to near the air conditioning capacity when compressor 8 is operating at the minimum operation frequency, and allows the cooling operation to be continued with this increased capacity.

As described above, the cooling operation is continued while the air conditioning capacity during the low capacity operation is adjusted. That is, when it is determined that the temperature is lower than 1°C while step S107 or step S108 is performed (NO in step S109), the processing returns to step S106 to continue the cooling operation by the low capacity operation. When the suction temperature is higher than the set temperature by 1°C (YES in step S109), the processing proceeds to a next step and returns to the normal operation.

On the other hand, during the heating operation, the flow of the refrigerant is in reverse, and the low capacity operation controller 32 controls first expansion valve 9 and second expansion valve 12 in a reverse manner of the cooling operation. Thus, heat transfers between first heat exchange area 40 and second heat exchange area 41 of indoor heat exchanger 4 in a reverse manner of the heat transfer during the cooling operation, and the heating operation can be performed with a lower capacity than when compressor 8 is operating at the minimum operation frequency.

As described above, the air conditioner of the present exemplary embodiment can perform comfortable air conditioning with a lower capacity than the capacity when compressor 8 is operating at the minimum operation frequency.

Further, in the present exemplary embodiment, the valve opening degree of first expansion valve 9 is adjusted by the difference between the suction temperature and the set temperature. Thus, the heat transfer between first heat exchange area 40 and second heat exchange area 41 can be adjusted, that is, the air conditioning capacity can be adjusted, and fine air conditioning control can be performed even during the low capacity operation.

As described above, the air conditioner according to the present exemplary embodiment divides indoor heat exchanger 4 into first heat exchange area 40 and second heat exchange area 41, and is provided with second expansion valve 12 between first heat exchange area 40 and second heat exchange area 41. Then, in the air conditioner according to the present exemplary embodiment, when the air conditioning capacity is excessive for the air conditioning load even if compressor 8 is operating at the minimum operation frequency, the valve opening degree of first expansion valve 9 is adjusted to transfer heat between first heat exchange area 40 and second heat exchange area 41. This lowers the air conditioning capacity and enables comfortable low capacity air conditioning.

Furthermore, the temperature of the conditioned air during such low capacity air conditioning is adjusted by heat transfer between first heat exchange area 40 and second heat exchange area 41. Thus, the temperature of the conditioned air does not change significantly over time, unlike an air conditioner that turns a compressor on and off, and comfortable air conditioning can be achieved even if the low capacity air conditioning is continued for a long time. Further, power consumption caused by turning the compressor on and off can be suppressed, and energy saving can be improved.

In addition, the capacity is lowered in this way, that is, heat transfers between first heat exchange area 40 and second heat exchange area 41 in the indoor heat exchanger, and thus a failure concerned when the capacity is lowered can be prevented from occurring. That is, a failure can be prevented in which the air that has exchanged heat between first heat exchange area 40 and second heat exchange area 41 and has a temperature difference is mixed in a fan downstream of the heat exchanger to generate dew condensation water, and this dew condensation water is blown out together with the conditioned air. Thus, highly reliable air conditioner can be provided.

In the present exemplary embodiment, when the capacity is lowered, the valve opening degree of first expansion valve 9 is adjusted to adjust the air conditioning capacity. However, this adjustment may be performed during the normal air conditioning operation, not limited to at low capacity time. This can reduce a frequency of changing the operation frequency of compressor 8 and finely adjust the capacity while ensuring energy saving.

For example, controller 30 does not have low capacity operation controller 32, and the operation frequency of compressor 8 is changed to control the air conditioning capacity until the difference between the suction temperature and the set temperature is less than or equal to a predetermined value, for example, 1°C. When the temperature is less than or equal to 1°C, the operations in step S106 and thereafter in FIG. 5 are performed.

As a result, while the difference between the suction temperature and the set temperature is higher than 1°C, the operation frequency of compressor 8 is changed to control the air conditioning capacity. After the difference between the suction temperature and the set temperature is less than or equal to 1°C, the air conditioning capacity is controlled by adjusting the opening degree of first expansion valve 9. This can reduce the frequency of changing the operation frequency of compressor 8. Thus, power consumption caused by changing the operation frequency of compressor 8 can be suppressed, and energy saving can be improved. Further, although the frequency of changing the operation frequency of compressor 8 is reduced, fine capacity control and comfortable air conditioning can be achieved.

### (Second exemplary embodiment)

An air conditioner according to a second exemplary embodiment of the present invention has the same configuration as the air conditioner according to the first exemplary embodiment shown in FIGS. 1 to 4. However, control of low capacity operation controller 32 of controller 30 is different from the control of the air conditioner according to the first exemplary embodiment. Hereinafter, control of the air conditioner according to the second exemplary embodiment will be described.

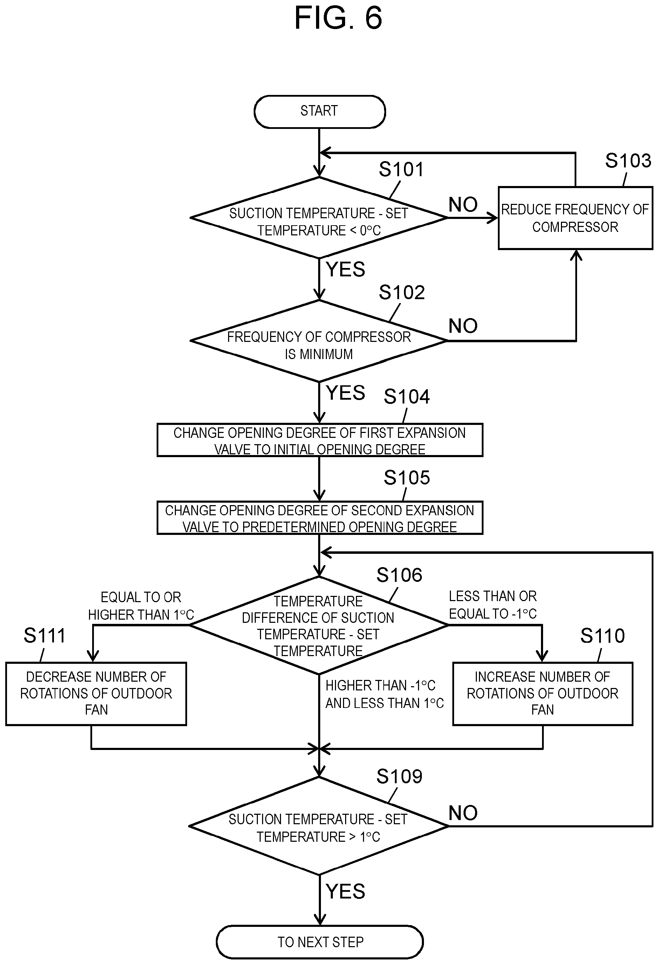

FIG. 6 is a flowchart showing low capacity control of the air conditioner according to the present exemplary embodiment.

As shown in FIG. 6, in the present exemplary embodiment, steps S101 to S105 are the same as in the first exemplary embodiment. However, the capacity control at the low capacity time after step S105 is performed by adjusting a number of rotations of outdoor fan 7 instead of adjusting the opening degree of first expansion valve 9.

That is, when temperature difference ΔT between the suction temperature and the set temperature is less than or equal to a predetermined temperature, that is, when the air conditioning capacity is excessive for the air conditioning load and the temperature is lowered (less than or equal to -1°C in step S106) even if the cooling is performed with compressor 8 operated with a capacity of the minimum operation frequency or less, the air conditioning load is determined to be smaller, and the number of rotations of outdoor fan 7 is increased (step S110).

This decreases both a condensation pressure of outdoor heat exchanger 6 and a condensation pressure and an evaporation pressure of first heat exchange area 40 and second heat exchange area 41 of indoor heat exchanger 4. As a result, a circulation amount of the refrigerant decreases, and the air conditioning capacity reduces. That is, cooling is performed with the air conditioning capacity further reduced.

Further, when temperature difference ΔT is equal to or higher than the predetermined temperature, that is, when the cooling is performed with compressor 8 operated with a capacity less than or equal to the minimum operation frequency, and the air cannot be cooled to the set temperature because the air conditioning load is large, in this example, when the suction temperature is higher than the set temperature by 1°C or higher (equal to or higher than 1°C in step S106), the number of rotations of outdoor fan 7 is decreased (step S111).

This alleviates a reduction in the condensation pressure of outdoor heat exchanger 6 and the condensation pressure and the evaporation pressure of first heat exchange area 40 and second heat exchange area 41 of indoor heat exchanger 4. As a result, the refrigerant circulation amount increases to near the refrigerant circulation amount when compressor 8 is operating at the minimum operation frequency, the air conditioning capacity returns to near the air conditioning capacity when compressor 8 is operating at the minimum operation frequency, and the cooling is performed with this air conditioning capacity.

Then, while above step S110 or step S111 is performed, when the suction temperature is higher than the set temperature by 1°C, the processing proceeds to the next step and returns to the normal operation, and when the temperature difference is less than 1°C, the processing returns from step S109 to step S106 and the cooling operation is continued by the low capacity operation.

As described above, cooling can be performed with a lower air conditioning capacity than the air conditioning capacity when compressor 8 is operating at the minimum operation frequency, and comfortable cooling can be achieved.

Similar to the capacity control by adjusting the opening degree of first expansion valve 9, the capacity control by controlling the number of rotations of outdoor fan 7 shown in the present exemplary embodiment may be performed during the normal air conditioning operation by changing the operation frequency of compressor 8, not limited to the low capacity time.

Further, in the first exemplary embodiment and the second exemplary embodiment, the number of rotations of indoor fan 5 may be adjusted to change an air volume of the blown air from indoor unit 1 during the low capacity operation.

In addition, the direction of the air blown out from indoor unit 1 may be changed to the vertical direction.

Further, although the opening degree of first expansion valve 9 or the number of rotations of outdoor fan 7 is adjusted on the basis of the difference between the indoor temperature and the set temperature, humidity information may be added to control the number of rotations of outdoor fan 7.

Further, heat exchange sections of first heat exchange area 40 and second heat exchange area 41 of indoor heat exchanger 4 (first heat exchange sections 40a, 41a, second heat exchange sections 40b, 41b, and third heat exchange sections 40c, 41c) are independent heat exchangers, but may be integrated. In this case, the heat transfers between first heat exchange area 40 and second heat exchange area 41 by the heat transferring between the air and by a conduction heat via a fin, which enhances an offset effect by the heat transfer and makes the heat transfer effective.

Although the air conditioner according to the present invention has been described using the above exemplary embodiments, the present invention is not limited thereto. The scope of the present invention is shown by the claims.

As described above, the air conditioner according to the present invention has the features of claim 1. In particular, in a first aspect, it configures a refrigeration cycle including a compressor having a variable operation frequency, an outdoor heat exchanger switchably serving as a condenser or an evaporator, a first expansion valve, and an indoor heat exchanger switchably serving as an evaporator or a condenser all of which are connected, in a loop form, to one another, and changes an air conditioning capacity by changing an operation frequency of the compressor by a controller. The indoor heat exchanger is divided into a first heat exchange area and a second heat exchange area, the first heat exchange area and the second heat exchange area are connected in series via a second expansion valve, and the first heat exchange area and the second heat exchange area are disposed to overlap each other in an air flow direction. The controller throttles the second expansion valve when the operation frequency of the compressor is a minimum operation frequency and the air conditioning capacity is excessive for an air conditioning load.

With this configuration, by throttling the second expansion valve, the first heat exchange area and the second heat exchange area of the indoor heat exchanger serve as a part that functions as a condenser and as a part that functions as an evaporator, heat transfer due to a temperature difference occurs between both heat exchange areas, and a heat exchange capacity as the entire indoor heat exchanger can be reduced. That is, the air conditioning operation can be continued with a capacity lower than the air conditioning capacity when the compressor is operating at the minimum operation frequency, and comfort can be greatly improved.

Furthermore, the air blown from the air conditioner during this low capacity air conditioning does not have a large temperature change over time, unlike an air conditioner that turns the compressor on and off. Thus, comfortable air conditioning can be provided even if the low capacity air conditioning is continued for a long time.

Further, when the air conditioning capacity is reduced, heat transfers between the first heat exchange area and the second heat exchange area in the indoor heat exchanger. Thus, an event can be prevented in which the air that has exchanged heat between the first heat exchange area and the second heat exchange area and has a temperature difference is mixed in a fan downstream of the indoor heat exchanger to generate dew condensation water when the capacity is reduced during cooling, and this dew condensation water is blown out together with the conditioned air from the indoor unit. Thus, a highly reliable air conditioner can be provided.

The air conditioner according to an embodiment of the present invention has a configuration such that the controller controls a valve opening degree of the first expansion valve in accordance with a temperature difference between a suction temperature of indoor air to be sucked into the indoor heat exchanger and a set temperature set by a remote controller.

With this configuration, a heat transfer amount between the first heat exchange area and the second heat exchange area can be changed by changing the temperature of the first heat exchange area and the temperature of the second heat exchange area in accordance with the temperature difference between the suction temperature and the set temperature. This can adjust the capacity at the low capacity time and achieve more comfortable air conditioning.

The air conditioner according to a further embodiment of the present invention has a configuration such that the outdoor heat exchanger includes an outdoor fan, and the controller controls a number of rotations of the outdoor fan in accordance with a temperature difference between a suction temperature of indoor air to be sucked into the indoor heat exchanger and a set temperature set by a remote controller.

With this configuration, a flow rate of the refrigerant flowing through the first heat exchange area and the second heat exchange area changes in accordance with the difference between the suction temperature and the set temperature. This can adjust the capacity at the low capacity time and achieve more comfortable air conditioning.

The air conditioner according to a second aspect of the present invention has a controller that is configured to variably control the valve opening degree of the first expansion valve or the number of rotations of the outdoor fan of the outdoor heat exchanger when the difference between the suction temperature and the set temperature is less than or equal to the predetermined value.

With this configuration, while the difference between the suction temperature and the set temperature is more than a predetermined value, the operation frequency of the compressor is changed to adjust the air conditioning capacity. After the difference between the suction temperature and the set temperature is less than or equal to the predetermined value, the air conditioning capacity is adjusted by controlling the valve opening degree of the first expansion valve or the number of rotations of the outdoor fan. This can reduce the frequency of changing the operation frequency of the compressor. Thus, power consumption caused by changing the operation frequency of the compressor can be suppressed, and energy saving can be improved. Further, this can finely adjust the capacity even if the frequency of changing the operation frequency of the compressor is reduced, thereby achieving comfort air conditioning.

### INDUSTRIAL APPLICABILITY

As described above, the present invention can provide a highly reliable air conditioner that achieves both a low air conditioning capacity and improved comfort during low capacity air conditioning. The present invention can be thus applied to various air conditioners including air conditioners used in general households.

### REFERENCE MARKS IN THE DRAWINGS

1: indoor unit
2: outdoor unit
3: pipe
4: indoor heat exchanger
5: indoor fan
6: outdoor heat exchanger
7: outdoor fan
8: compressor
9: first expansion valve
10: four-way valve
12: second expansion valve
14: first temperature detector
15: second temperature detector
16: room temperature detector
17: room temperature setting unit
18: outdoor heat exchange temperature detector
21: air suction port
22: air outlet
23: air duct
24: air direction changing blade
25: filter
30: controller
31: inverter controller
32: low capacity operation controller
40: first heat exchange area
40a, 41a: first heat exchange section
40b, 41b: second heat exchange section
40c, 41c: third heat exchange section
41: second heat exchange area
32: low capacity operation controller
40: first heat exchange area
40a, 41a: first heat exchange section
40b, 41b: second heat exchange section
40c, 41c: third heat exchange section
41: second heat exchange area

## Claims

1. An air conditioner comprising:
a refrigeration cycle;
wherein the refrigeration cycle includes:
a compressor (8) having a variable operation frequency;
a four-way valve (10) for switching between heating and cooling;
an outdoor heat exchanger (6) for switchably serving as a condenser or an evaporator;
a first expansion valve (9); and
an indoor heat exchanger (4) for switchably serving as an evaporator or a condenser;
the compressor (8), the four-way valve (10), the outdoor heat exchanger (6), the first expansion valve (9), and the indoor heat exchanger (4) are sequentially connected, in a loop form, to one another,
the air conditioner is configured to change an air conditioning capacity by changing an operation frequency of the compressor (8) by a controller (30) in accordance with an air conditioning load determined by a temperature difference between a set temperature set by a room temperature setting unit (17) and a suction temperature of indoor air detected by an indoor room temperature detector (16),
the indoor heat exchanger (4) is divided into a first heat exchange area (40) and a second heat exchange area (41), the first heat exchange area (40) and the second heat exchange area (41) are connected in series via a second expansion valve (12), and the first heat exchange area (40) and the second heat exchange area (41) are disposed to overlap each other in an air flow direction, and
(i) the controller is configured to throttle the second expansion valve (12) when the operation frequency of the compressor (8) is a minimum operation frequency and the air conditioning capacity is excessive for the determined air conditioning load, or,
(ii) when a difference between a suction temperature of indoor air to be sucked into the indoor heat exchanger (4) and a set temperature for being set by a remote controller is less than or equal to a predetermined value, the controller variably controls a valve opening degree of the first expansion valve (9) or a number of rotations of an outdoor fan (7) included in the outdoor heat exchanger (6).

2. The air conditioner according to claim 1(i), wherein the controller is configured to control a valve opening degree of the first expansion valve (9) in accordance with a temperature difference between a suction temperature of indoor air to be sucked into the indoor heat exchanger (4) and a set temperature for being set by a remote controller.

3. The air conditioner according to claim 1(i), wherein the outdoor heat exchanger (6) includes an outdoor fan (7), and the controller is configured to control a number of rotations of the outdoor fan (7) in accordance with a temperature difference between a suction temperature of indoor air to be sucked into the indoor heat exchanger (4) and a set temperature for being set by a remote controller.

## Patentansprüche

1. Klimaanlage, umfassend:
einen Kältekreislauf;
wobei der Kältekreislauf enthält:
einen Verdichter (8) mit einer variablen Betriebsfrequenz;
ein Vier-Wege-Ventil (10) zum Umschalten zwischen Heizung und Kühlung;
einen Außenwärmetauscher (6), der umschaltbar als Verflüssiger oder Verdampfer dient;
ein erstes Expansionsventil (9); und
einen Innenwärmetauscher (4), der umschaltbar als Verdampfer oder Verflüssiger dient;
wobei der Verdichter (8), das Vier-Wege-Ventil (10), der Außenwärmetauscher (6), das erste Expansionsventil (9) und der Innenwärmetauscher (4) nacheinander in einer Schleifenform miteinander verbunden sind,
wobei die Klimaanlage dazu konfiguriert ist, eine Klimatisierungsleistung zu ändern, indem eine Betriebsfrequenz des Verdichters (8) durch eine Steuereinrichtung (30) in Abhängigkeit von einer Klimatisierungslast, die durch eine Temperaturdifferenz zwischen einer durch eine Raumtemperatureinstelleinheit (17) eingestellten Solltemperatur und einer durch einen Innenraumtemperaturdetektor (16) erfassten Ansaugtemperatur der Innenraumluft bestimmt wird, geändert wird,
wobei der Innenwärmetauscher (4) in einen ersten Wärmeaustauschbereich (40) und einen zweiten Wärmeaustauschbereich (41) unterteilt ist, wobei der erste Wärmeaustauschbereich (40) und der zweite Wärmeaustauschbereich (41) über ein zweites Expansionsventil (12) in Serie verbunden sind, und wobei der erste Wärmeaustauschbereich (40) und der zweite Wärmeaustauschbereich (41) so angeordnet sind, dass sie in einer Luftströmungsrichtung einander überlappen, und
(i) die Steuereinrichtung dazu konfiguriert ist, das zweite Expansionsventil (12) zu drosseln, wenn die Betriebsfrequenz des Verdichters (8) eine minimale Betriebsfrequenz ist und die Klimatisierungsleistung für die bestimmte Klimatisierungslast übermäßig ist, oder,
(ii) wenn eine Differenz zwischen einer Ansaugtemperatur der in den Innenwärmetauscher (4) anzusaugenden Innenraumluft und einer von einer Fernsteuereinrichtung einzustellenden Solltemperatur kleiner oder gleich einem vorbestimmten Wert ist, die Steuereinrichtung einen Ventilöffnungsgrad des ersten Expansionsventils (9) oder eine Drehzahl eines in dem Außenwärmetauscher (6) enthaltenen Außenlüfters (7) variabel steuert.

2. Klimaanlage nach Anspruch 1(i), wobei die Steuereinrichtung dazu konfiguriert ist, einen Ventilöffnungsgrad des ersten Expansionsventils (9) in Abhängigkeit von einer Temperaturdifferenz zwischen einer Ansaugtemperatur der in den Innenwärmetauscher (4) anzusaugenden Innenraumluft und einer von einer Fernsteuereinrichtung einzustellenden Solltemperatur zu steuern.

3. Klimaanlage nach Anspruch 1(i), wobei der Außenwärmetauscher (6) einen Außenlüfter (7) aufweist und die Steuereinrichtung dazu konfiguriert ist, eine Drehzahl des Außenlüfters (7) in Abhängigkeit von einer Temperaturdifferenz zwischen einer Ansaugtemperatur der in den Innenwärmetauscher (4) anzusaugenden Innenraumluft und einer von einer Fernsteuereinrichtung einzustellenden Solltemperatur zu steuern.

## Revendications

1. Climatiseur comprenant :
un cycle de réfrigération ;
le cycle de réfrigération incluant :
un compresseur (8) présentant une fréquence de fonctionnement variable ;
une vanne à quatre voies (10) destinée à une commutation entre chauffage et refroidissement ;
un échangeur de chaleur extérieur (6) destiné à servir de manière commutable de condenseur ou d'évaporateur ;
un premier détendeur (9) ; et
un échangeur de chaleur intérieur (4) destiné à servir de manière commutable d'évaporateur ou condenseur ;
le compresseur (8), la vanne à quatre voies (10), l'échangeur de chaleur extérieur (6), le premier détendeur (9) et l'échangeur de chaleur intérieur (4) étant reliés de manière séquentielle, sous forme d'une boucle, les uns aux autres,
le climatiseur étant conçu pour modifier une capacité de climatisation en changeant une fréquence de fonctionnement du compresseur (8) par un dispositif de commande (30) en fonction d'une charge de climatisation déterminée par une différence de température entre une température de consigne réglée par une unité de réglage de température ambiante (17) et une température d'aspiration d'air intérieur détectée par un détecteur de température ambiante intérieure (16),
l'échangeur de chaleur intérieur (4) étant divisé en une première zone d'échange de chaleur (40) et une seconde zone d'échange de chaleur (41), la première zone d'échange de chaleur (40) et la seconde zone d'échange de chaleur (41) étant reliées en série par l'intermédiaire d'un second détendeur (12) et la première zone d'échange de chaleur (40) et la seconde zone d'échange de chaleur (41) étant disposées de manière à se chevaucher l'une l'autre dans un sens d'écoulement d'air et
(i) le dispositif de commande étant conçu pour étrangler le second détendeur (12) lorsque la fréquence de fonctionnement du compresseur (8) est une fréquence de fonctionnement minimale et que la capacité de climatisation est excessive pour la charge de climatisation déterminée ou
(ii) lorsqu'une différence entre une température d'aspiration d'air intérieur à aspirer dans l'échangeur de chaleur intérieur (4) et une température de consigne à régler par un dispositif de commande à distance est inférieure ou égale à une valeur prédéterminée, le dispositif de commande contrôlant de manière variable un degré d'ouverture de vanne du premier détendeur (9) ou un nombre de rotations d'un ventilateur extérieur (7) inclus dans l'échangeur de chaleur extérieur (6).

2. Climatiseur selon la revendication 1 (i), dans lequel le dispositif de commande est conçu pour contrôler un degré d'ouverture de vanne du premier détendeur (9) en fonction d'une différence de température entre une température d'aspiration d'air intérieur à aspirer dans l'échangeur de chaleur intérieur (4) et une température de consigne à régler par un dispositif de commande à distance.

3. Climatiseur selon la revendication 1 (i), dans lequel l'échangeur de chaleur extérieur (6) comprend un ventilateur extérieur (7) et le dispositif de commande est conçu pour contrôler un nombre de rotations du ventilateur extérieur (7) en fonction d'une différence de température entre une température d'aspiration d'air intérieur à aspirer dans l'échangeur de chaleur intérieur (4) et une température de consigne à régler par un dispositif de commande à distance.
